# FASCICULE DE BREVET EUROPEEN

(11) **EP 3 774 690 B1**
(45) Date de publication et mention de la délivrance du brevet: **01.06.2022**
(21) Numéro de dépôt: 19722166.6
(22) Date de dépôt: 04.04.2019
(51) Int. Cl.: C04B 35/80, B01D 29/82, B29C 43/36, B28B 3/00, C04B 35/565, C04B 35/488, C04B 35/447, C04B 35/185, C04B 35/18, C04B 35/14, B28B 23/00, B28B 1/26, B28B 1/24, B29C 70/48, C04B 35/117, B28B 17/00, B29C 70/44

(54) **PROCEDE DE FABRICATION D'UNE PIECE EN MATERIAU COMPOSITE PAR INJECTION D'UNE BARBOTINE CERAMIQUE CHARGEE DANS UNE TEXTURE FIBREUSE**
VERFAHREN ZUR HERSTELLUNG EINES TEILS AUS EINEM VERBUNDWERKSTOFF MITTELS INJEKTION EINER BELADENEN KERAMIKAUFSCHLÄMMUNG IN EINE FASRIGE STRUKTUR
PROCESS FOR THE MANUFACTURE OF A COMPOSITE MATERIAL PART BY INJECTION OF A CERAMIC LOADED SLURRY

(30) Priorité: 13.04.2018 FR 1853258
(43) Date de publication de la demande: 17.02.2021
(73) Titulaire: Safran Ceramics, 33185 Le Haillan (FR)
(72) Inventeur: PHILIPPE, Eric, 77550 MOISSY-CRAMAYEL (FR); CARMINATI, Paul, 33700 MERIGNAC (FR); BOUNIA. Medhy Damien, 77550 MOISSY-CRAMAYEL (FR); DESJOYEAUX, Bertrand, 76310 SAINTE ADRESSE (FR)
(74) Mandataire: Cabinet Beau de Loménie
(86) Numéro de dépôt international: PCT/FR2019/050796
(87) Numéro de publication internationale: WO 2019/197757

(56) Documents cités:
- EP-A2- 0 491 646
- WO-A1-2016/102839
- WO-A1-2017/187050
- US-A1- 2006 233 907
- NORDLUND ET AL: "Particle deposition mechanisms during processing of advanced composite materials", COMPOSITES PART A: APPLIED SCIENCE AND MANUFACTURING, ELSEVIER, AMSTERDAM, NL, vol. 38, no. 10, 1 octobre 2007 (2007-10-01), pages 2182-2193, XP022285451, ISSN: 1359-835X, DOI: 10.1016/J.COMPOSITESA.2007.06.009

## Description

### Arrière-plan de l'invention

La présente invention se rapporte au domaine général de la fabrication de pièces en matériau composite, notamment à matrice céramique (CMC), c'est-à-dire comprenant un renfort fibreux formé à partir de fibres en matériau céramique densifié par une matrice également en matériau céramique, comme par exemple de type oxyde/oxyde.

Les pièces en matériau composite à matrice céramique (CMC) sont généralement fabriquées par drapage dans un moule d'une pluralité de strates fibreuses réalisées à partir de fibres en matériau céramique, par exemple en carbure de silicium (SiC) afin de former une préforme fibreuse.

La préforme est ensuite imprégnée avec une barbotine chargée de particules de matériau céramique, comme par exemple également du SiC, par un procédé de moulage par injection dit « RTM ». Dans le cas de la fabrication d'une pièce en matériau CMC de type oxyde/oxyde, les fibres et les particules de la barbotine sont en oxyde, comme par exemple de l'alumine (Al₂O₃).

Pour ce faire, la barbotine chargée des particules de céramique est injectée dans la cavité séparant le moule et son contre-moule dans laquelle est située la préforme, afin de traverser la préforme grâce à l'application d'un gradient de pression. Le moule dans lequel l'injection de la barbotine est effectuée comprend un filtre au niveau de l'orifice de sortie de la barbotine dans le moule, permettant ainsi de retenir les particules de céramique dans le moule et d'imprégner la préforme au fur et à mesure du dépôt des particules de céramiques dans le moule.

Les solutions de fabrication par injection des pièces en matériau composite à matrice céramique actuelles rencontrent cependant un problème pour la fabrication de pièces de grandes tailles et de faibles épaisseurs, comme par exemple des viroles d'échappement. Par exemple, pour des pièces avec un diamètre de 1,5 m et une épaisseur de 1 mm, les tolérances de dimensionnement que doivent respecter le moule et le contre moule sont extrêmement fines, rendant très compliqué la fabrication d'un moule et d'un contre moule conformes pour la fabrication d'une telle pièce.

On connaît également le document WO2016/102842 qui décrit un outillage de moulage par injection (RTM) qui utilise une membrane déformable à la place d'un contre moule. Une telle solution permet d'éviter les problèmes de tolérance de dimensionnement.

Ainsi, dans le document WO2016/102842, la barbotine est injectée dans la chambre d'imprégnation dans laquelle est disposée la préforme fibreuse, puis une pression est exercée sur la membrane souple afin de faire pénétrer la barbotine au travers de la préforme fibreuse.

Cependant, il est difficile de contrôler le taux volumique de fibres avec la solution décrite dans le document WO2016/102842.

De plus, la solution décrite dans le document WO2016/102842 peut également rencontrer des problèmes d'inhomogénéité dans le dépôt des particules de poudre de la barbotine à l'intérieur de la préforme fibreuse.

On connaît enfin le document WO 2016/102839 qui décrit un procédé de fabrication de pièces en CMC comprenant les étapes suivantes : (a) placement d'une texture fibreuse dans un moule comprenant une cavité de moulage et un contre-moule ; (b) injection sous pression d'une barbotine comprenant des particules céramiques ; (c) drainage par une pièce en matériau poreux du milieu liquide de la barbotine ; le contre-moule exerçant une pression sur la texture fibreuse avant et pendant l'étape (b), par exemple par application d'un fluide sur le contre-moule à une pression de compaction.

### Objet et résumé de l'invention

La présente invention a donc pour but principal de pallier de tels inconvénients en proposant une solution de fabrication d'une pièce en matériau composite à renfort fibreux permettant un meilleur contrôle du taux volumique de fibres.

Un autre but de la présente invention est de permettre une meilleure sédimentation des particules de la barbotine au sein du renfort fibreux.

Ainsi, selon un premier aspect, l'invention propose un procédé de fabrication d'une pièce en matériau composite comprenant les étapes suivantes :
- disposition d'une préforme fibreuse dans un moule comprenant une chambre d'imprégnation qui comprend dans sa partie inférieure un filtre en faisant reposer une première face de la préforme sur ledit filtre, la chambre d'imprégnation étant fermée par une membrane souple placée en regard d'une deuxième face de la préforme, ladite membrane séparant la chambre d'imprégnation d'une chambre de compaction ;
caractérisé en ce que le procédé comprend en outre les étapes suivantes :
- injection d'un fluide de compression dans la chambre de compaction de manière à appliquer une première pression sur la membrane ;
- injection d'une barbotine comprenant des particules céramiques dans la chambre d'imprégnation avec une deuxième pression tout en maintenant l'injection du fluide de compression, la deuxième pression d'injection de la barbotine étant inférieure à la première pression sur la membrane, dans lequel le procédé comprend l'étape suivante :
- augmentation progressive de la première pression sur la membrane et de la deuxième pression d'injection de la barbotine avec maintien de la deuxième pression d'injection de la barbotine inférieure à la première pression sur la membrane.

Le procédé peut comprendre les caractéristiques suivantes, prises seules ou en combinaison suivant les possibilités techniques :
- la différence de pression entre la première pression et la deuxième pression est maintenue constante à une valeur prédéterminée ;
- la différence de pression entre la première pression et la deuxième pression est inférieure à 5 bars ;
- la différence de pression entre la première pression et la deuxième pression est inférieure à 2 bars ;
- la différence de pression entre la première pression et la deuxième pression est comprise entre 0,5 et 1 bar ;
- le procédé comprend une étape de pré-saturation réalisée avant l'injection de la barbotine et dans laquelle un liquide est injecté au travers de la préforme dans la chambre d'imprégnation.

Selon un deuxième aspect, l'invention propose un système de fabrication d'une pièce en matériau composite comprenant :
- un moule qui comprend une chambre d'imprégnation comportant dans sa partie inférieure un filtre destiné à recevoir une première face d'une préforme, la chambre d'imprégnation étant fermée par une membrane souple située en regard du filtre, ladite membrane séparant la chambre d'imprégnation d'une chambre de compaction ;
- un dispositif d'injection d'un fluide de compression dans la chambre de compaction de manière à appliquer une première pression sur la membrane ;
- un dispositif d'injection d'une barbotine comprenant des particules céramiques en suspension dans une phase liquide dans la chambre d'imprégnation avec une deuxième pression ;
   caractérisé en ce que le système comprend en outre une unité de contrôle configurée pour contrôler le dispositif d'injection du fluide de compression et le dispositif d'injection de la barbotine pour maintenir la deuxième pression d'injection de la barbotine inférieure à la première pression sur la membrane.

Le système peut comprendre les caractéristiques suivantes, prises seules ou en combinaison suivant les possibilités techniques :
- le moule comprend un orifice d'entrée de la barbotine débouchant sur un grillage de répartition à l'intérieur de la chambre d'imprégnation ;
- le grillage de répartition comprend une face opposée à l'orifice d'entrée de la barbotine qui est recouverte par une couche anti-adhérente poreuse ;
- le moule comprend un orifice de sortie de la barbotine débouchant sur un grillage de drainage, ledit grillage de drainage étant recouvert par le filtre ;
- le grillage de drainage comprend une face opposée à l'orifice de sortie de la barbotine qui est recouverte par une couche anti-adhérente poreuse.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure la représente un système de fabrication d'une pièce en matériau composite ;
- la figure 1b représente une autre variante possible d'un système de fabrication d'une pièce en matériau composite ;
- la figure 2 représente schématiquement le dépôt des particules de la barbotine à l'intérieur de la préforme fibreuse ;
- les figures 3a et 3b représente des courbes d'évolution de la première pression et la deuxième pression selon des variantes possibles ;
- la figure 4 représente une vue en coupe d'une pièce obtenue avec le procédé selon l'invention.

### Description détaillée de l'invention

Comme représenté sur les figures la, 1b et 2, un système 1 de fabrication d'une pièce en matériau composite comprend un moule 2 qui comprend d'une part une chambre d'imprégnation 21 dans laquelle est disposée une préforme 3 fibreuse afin d'être imprégnée par une matrice en matériau céramique, et d'autre part une chambre de compaction 22 dans laquelle un fluide de compression est injecté afin d'appliquer une pression sur la préforme 3 durant l'imprégnation de ladite préforme 3.

La chambre d'imprégnation 21 et la chambre de compaction 22 du moule 2 sont séparées par une membrane 23 souple. La membrane 23 permet d'appliquer la pression sur la préforme 3 installée dans la chambre d'imprégnation 21 par injection du fluide de compression dans la chambre de compaction 22, le fluide de compression appliquant une pression sur la membrane qui se déforme et applique à son tour une pression sur la préforme 3. La membrane 23 est par exemple en silicone.

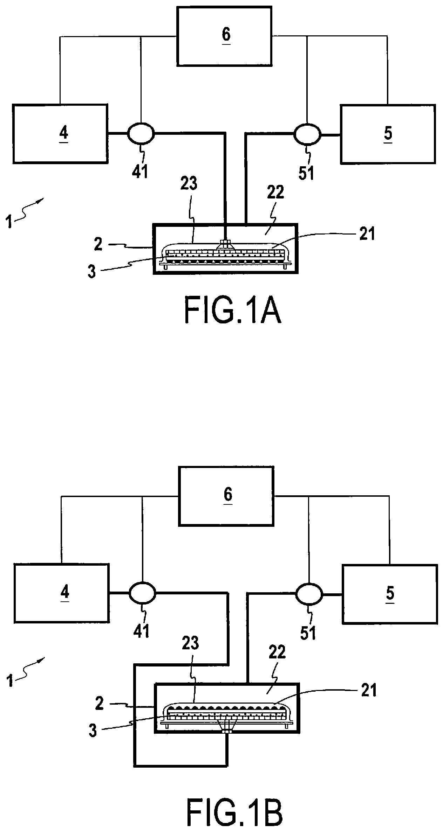

Comme représenté sur la figure 1a, la barbotine qui est injectée au travers de la préforme 3 peut être injectée au travers d'un orifice d'entrée situé sur la même face de la préforme 3 que la membrane 23. Selon une autre variante représentée sur la figure 1b, l'orifice d'entrée par lequel la barbotine est injectée au travers de la préforme 3 peut être sur une face de ladite préforme 3 opposée à la face de ladite préforme 3 sur laquelle la membrane 23 est située.

Dans la variante de la figure la, la chambre d'imprégnation 21 comprend dans sa partie inférieure (partie supérieure pour la variante de la figure 1b) un filtre 210 sur lequel repose une première face de la préforme 3 lorsque ladite préforme 3 est disposée à l'intérieur de la chambre d'imprégnation. La forme du filtre 210 est adaptée pour maintenir la première face de la préforme 3 dans la forme à fabriquer. Le filtre 210 peut par exemple être réalisé en polytétrafluoroéthylène (PTFE) microporeux, en résine, en métal, comme par exemple en aluminium en en acier inoxydable.

La préforme 3 peut être réalisée par empilements de strates ou plis obtenus par tissage bidimensionnel (2D). La préforme 3 peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Par « tissage tridimensionnel » ou « tissage 3D », on entend ici un tissage pour lequel des fils de chaîne traversent plusieurs couches de fils de trame, ou des fils de trame traversent plusieurs couches de fils de chaîne.

La préforme 3 peut également être réalisée par des nappes de fibres unidirectionnelles (UD), qui peuvent être obtenues par placement automatique des fibres (AFP pour « Automated Fibre Placement » selon l'expression anglo-saxonne), ou par enroulement filamentaire.

La préforme 3 peut être réalisée à partir de fibres constituées des matériaux suivants : l'alumine, la mullite, la silice, un aluminosilicate, un borosilicate, du carbure de silicium, du carbone, ou un mélange de plusieurs de ces matériaux.

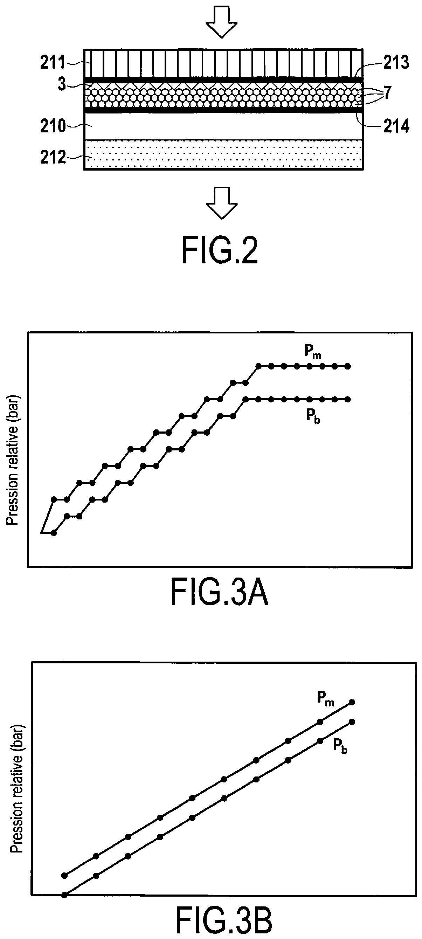

Comme visible sur la figure 2, le système 1 peut comprendre un grillage de répartition 211 sur lequel débouche l'orifice d'entrée de la barbotine à l'intérieur de la chambre d'imprégnation 21. Ce grillage de répartition 211 permet de mieux répartir la barbotine sur toute la surface de la préforme 3. De plus, une première couche anti-adhérente poreuse 213, par exemple en téflon poreux, peut être déposée sur la face du grillage de répartition 211 qui est opposée à l'orifice d'entrée de la barbotine. Cette première couche anti-adhérente poreuse 213 est située entre le grillage de répartition 211 et la préforme 3, et permet de faciliter le retrait de ladite préforme 3 du moule 2.

Le système 1 peut comprendre en outre un grillage de drainage 212 situé sous le filtre 210. Le grillage de drainage 212 est situé dans la partie inférieure de la chambre d'imprégnation 21 pour la variante de la figure la et la partie supérieure pour la variante de la figure 1b, de sorte que l'orifice de sortie de la barbotine de ladite chambre d'imprégnation 21 débouche sur ledit grillage drainant 212. De plus, une seconde couche anti-adhérente poreuse 214, par exemple en téflon poreux, peut être déposée sur la face du grillage de drainage 212 qui est opposée à l'orifice de sortie de la barbotine. Cette deuxième couche anti-adhérente poreuse 214 est située entre le grillage de drainage 211 et la préforme 3, et permet de faciliter le retrait de ladite préforme 3 du moule 2.

Le système 1 comprend également un dispositif d'injection d'une barbotine 4 qui est configuré pour injecter la barbotine dans la chambre d'imprégnation 21 du moule 2 avec une deuxième pression Pb. La barbotine est destinée à permettre la formation de la matrice en matériau céramique de la pièce à fabriquer. La barbotine comprend des particules 7 de céramiques mise en suspension dans une phase liquide.

La phase liquide de la barbotine peut notamment être constituée par de l'eau (pH acide ou basique), de l'éthanol, ou tout autre liquide dans lequel il est possible de mettre la poudre désirée en suspension. Un liant organique peut être aussi ajouté (PVA, PEG, PVP, soluble dans l'eau). Ce liant permet d'assurer la tenue du cru après séchage et avant frittage.

Les particules 7 de céramique de la barbotine peuvent être en alumine, en mullite, en silice, en zircone, en aluminosilicate ou en aluminophosphate, ou un mélange de ces composants. Les particules 7 de céramique peuvent également être en carbure, par exemple en carbure de silicium. La taille moyenne, ou dimension particulaire moyenne, des particules 7 est comprise entre 0,1 µm et 10 µm. Par « taille moyenne » on désigne la dimension donnée par la distribution granulométrique statistique à la moitié de la population, dite D50. La taille des porosités du filtre 210 est adaptée à la dimension des particules 7 de la barbotine afin que lesdites particules 7 de la barbotine ne traversent pas ledit filtre 210 et soient retenues dans la chambre d'imprégnation 21.

Le système 1 comprend aussi un dispositif d'injection du fluide de compression 5 qui est configuré pour injecter ledit fluide de compression dans la chambre de compactage 22 du moule avec une première pression Pm. Le fluide de compression peut par exemple être de l'air comprimé, ou bien de l'eau.

Le système 1 comprend en outre une unité de contrôle 6 qui est configurée pour contrôler le dispositif d'injection de la barbotine 4 et le dispositif d'injection du fluide de compression 5. L'unité de contrôle 6 comprend par exemple un processeur associé à une mémoire sur laquelle sont stockées les instructions pour mettre en œuvre le procédé de fabrication de la pièce en matériau composite.

Le système 1 comprend également d'une part un premier capteur de pression 41 qui est configuré pour mesurer la pression d'injection de la barbotine par le dispositif d'injection de la barbotine 4 et qui est relié à l'unité de contrôle 6, et d'autre part un deuxième capteur de pression 51 qui est configuré pour mesurer la pression d'injection du fluide de compression par le dispositif d'injection du fluide de compression 5 et qui est relié à l'unité de contrôle 6.

Le procédé de fabrication de la pièce en matériau composite comprend les étapes suivantes :
- disposer la préforme 3 à l'intérieur de la chambre d'imprégnation 21.
- injecter le fluide de compression dans la chambre de compaction 22 avec une première pression Pm. La première pression Pm correspond donc à la pression appliquée sur la membrane 23. Cette étape permet de compresser la préforme fibreuse et de lui donner le taux volumique de fibre désiré. Cette étape est réalisée par le dispositif d'injection du fluide de compression 5 commandé par l'unité de contrôle 6.
- injecter la barbotine dans la chambre d'imprégnation 21 à une deuxième pression Pb, tout en continuant d'injecter le fluide de compression dans la chambre de compaction 22, la deuxième pression Pb étant inférieure à la première pression Pm. L'injection de la barbotine permet le dépôt par sédimentation des particules 7 au sein de la préforme fibreuse 3. Le fait que la deuxième pression Pb (la pression d'injection de la barbotine) soit inférieure à première pression Pm (la pression exercée sur la membrane 23) permet d'assurer un taux volumique de fibre minimum pour la pièce à fabriquer. Cette étape est réalisée par le dispositif d'injection de la barbotine 6 commandé par l'unité de contrôle 6.

Ainsi, l'unité de contrôle 6 est configurée pour contrôler les dispositifs d'injection 4 et 5, notamment grâce aux capteurs de pression 41 et 51, pour maintenir la deuxième pression Pb inférieure à la première pression Pm.

La deuxième pression Pb est augmentée progressivement durant le procédé, afin de compenser les pertes de charges provoquées par le dépôt des particules 7 au sein de la préforme fibreuse, et ainsi accélérer la sédimentation desdites particules 7. Afin de maintenir la première pression Pm supérieure à la deuxième pression Pb, la première pression Pm est également augmentée durant le procédé.

Selon une variante avantageuse, le procédé est réalisé en injectant tout d'abord le fluide de compression dans la chambre de compaction 22 de manière à appliquer la première pression Pm sur la préforme 3 dont la valeur permet d'obtenir le taux volumique de fibre souhaité, par exemple 1 bar. Puis, la barbotine est injectée dans la chambre d'imprégnation 21 à la deuxième pression Pb. La première pression Pm est alors augmentée pour que la différence de pression ΔP entre la première pression Pm et la deuxième pression Pb (ΔP = Pm - Pb) soit égale à la valeur initiale de la première pression (1 bar dans cet exemple), permettant ainsi de maintenir le taux volumique de fibre égal à la valeur désiré. La deuxième pression Pb est augmentée progressivement durant le procédé afin de compenser les pertes de charges, la première pression Pm étant également augmentée afin de maintenir la différence de pression ΔP constante. La première pression Pm peut par exemple atteindre une valeur maximale de 7 bars lors du procédé de fabrication, la valeur maximale de la deuxième pression Pb étant donc de 6 bars dans cet exemple. Les figures 3a et 3b illustrent des exemples d'évolution de la première pression Pm et la deuxième pression Pb afin de maintenir la différence de pression ΔP constante. Selon une variante illustrée sur la figure 3a, la première pression Pm et la deuxième pression Pb évoluent par paliers. La première pression Pm augmente tandis que la deuxième pression Pb reste constante, puis la deuxième pression Pb augmente tandis que la première pression Pm reste constante, et ainsi de suite. Selon une autre variante illustrée sur la figure 3b, la première pression Pm et la deuxième pression Pb évoluent toutes les deux de manière linéaire.

La différence de pression ΔP est de préférence inférieure à 5 bars, afin de limiter le tassage de la préforme 3, un tassage trop important de la préforme 3 ralentissant la circulation de la barbotine au travers de ladite préforme 3, et donc ralentissant le processus de dépôt par sédimentation des particules 7. De manière encore plus préférentielle, la différence de pression ΔP est inférieure à 2 bars, et de manière encore plus préférée est comprise entre 0,5 et 1 bar.

Une étape de pré-saturation en fluide porteur de la préforme 3 peut être réalisée avant l'injection du fluide de compression et l'injection de la barbotine afin d'éliminer tout l'air contenu dans la préforme 3 et adapter la mouillabilité des fibres. L'étape de pré-saturation est réalisée en injectant dans la chambre d'imprégnation 21, à l'intérieure de laquelle la préforme 3 est disposée, un liquide, comme par exemple de l'eau ou un alcool. Le liquide n'est pas chargé en particules.

Le système 1 de fabrication de la pièce en matériau composite peut également comprendre des moyens de chauffage, comme par exemple des éléments résistifs intégrés aux parois du moule 2, afin d'augmenter la température à l'intérieur du moule 2, et particulièrement dans la chambre d'imprégnation 21, et faciliter l'évacuation de la phase liquide de la barbotine par évaporation après injection totale. La température dans le moule 2 peut être établie par exemple à une température comprise entre 80°C et 110°C.

La préforme 3, une fois chargée des particules 7 et séchée, est extraite du moule 2, ladite préforme 3 conservant sa géométrie de compaction après démoulage. La préforme 3 est ensuite soumise à un traitement thermique de frittage, par exemple sous air et à une température comprise entre 1000°C et 1300°C, afin de fritter les particules 7 de céramique dans la préforme 3. On obtient alors une pièce en matériau composite à matrice céramique comprenant un renfort fibreux céramique.

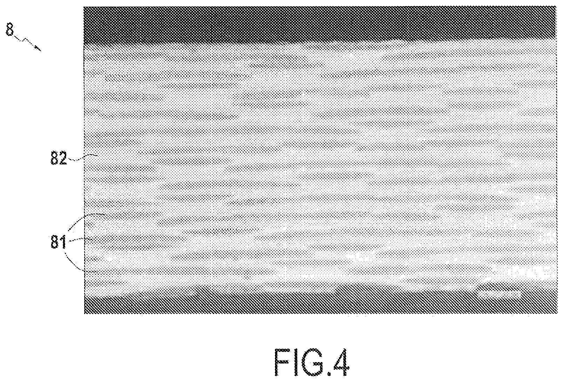

Comme cela est visible sur la figure 4 qui illustre une coupe d'une pièce 8 réalisée par le procédé selon l'invention avec une différence de pression ΔP (Pm - Pb) de 1 bar. Le renfort fibreux 81 de la pièce 8, qui correspond à la préforme 3, est formée par empilements d'une pluralité de plis en fibres d'alumine, et la matrice 82 de ladite pièce 8 est également en alumine. Lors de la réalisation de la pièce 8, le taux volumique de fibres visé était un taux compris entre 30% et 60%, et de préférence entre 45% et 55%, une densité visée supérieure à 2,5, de préférence supérieure à 3, et une porosité visée comprise entre 15% et 40%, et de préférence entre 17% et 23%. La pièce 8 obtenue possède un taux volumique de fibres de 48%, une porosité de 20%, et une densité de 3,1. De plus, comme visible sur la figure 4, la matrice 82 est homogène, montrant ainsi le bon dépôt par sédimentation des particules 7 au sein de la préforme 3.

L'invention s'applique particulièrement bien aux pièces ayant une faible épaisseur et une grande surface, comme les carters de turbomachine, comme par exemple les carters de soufflante, les carters de compresseur, et les carters d'échappement.

L'expression « comprise entre ... et ... » doit se comprendre comme incluant les bornes.

## Revendications

1. Procédé de fabrication d'une pièce (8) en matériau composite comprenant les étapes suivantes :
- disposition d'une préforme (3) fibreuse dans un moule (2) comprenant une chambre d'imprégnation (21) qui comprend dans sa partie inférieure un filtre (210) en faisant reposer une première face de la préforme (3) sur ledit filtre (210), la chambre d'imprégnation (21) étant fermée par une membrane (23) souple placée en regard d'une deuxième face de la préforme (3), ladite membrane (23) séparant la chambre d'imprégnation (21) d'une chambre de compaction (22) ;
**caractérisé en ce que** le procédé comprend en outre les étapes suivantes :
- injection d'un fluide de compression dans la chambre de compaction (22) de manière à appliquer une première pression (Pm) sur la membrane (23) ;
- injection d'une barbotine comprenant des particules (7) céramiques dans la chambre d'imprégnation (21) avec une deuxième pression (Pb) tout en maintenant l'injection du fluide de compression, la deuxième pression (Pb) d'injection de la barbotine étant inférieure à la première pression (Pm) sur la membrane (23),
dans lequel le procédé comprend l'étape suivante :
- augmentation progressive de la première pression (Pm) sur la membrane (23) et de la deuxième pression (Pb) d'injection de la barbotine avec maintien de la deuxième pression (Pb) d'injection de la barbotine inférieure à la première pression (Pm) sur la membrane (23).

2. Procédé selon la revendication 1, dans lequel la différence de pression (ΔP) entre la première pression (Pm) et la deuxième pression (Pb) est maintenue constante à une valeur prédéterminée.

3. Procédé selon l'une des revendications 1 à 2 dans lequel la différence de pression (ΔP) entre la première pression (Pm) et la deuxième pression (Pb) est inférieure à 5 bars.

4. Procédé selon la revendication 3, dans lequel la différence de pression (ΔP) entre la première pression (Pm) et la deuxième pression (Pb) est inférieure à 2 bars.

5. Procédé selon la revendication 4, dans lequel la différence de pression (ΔP) entre la première pression (Pm) et la deuxième pression (Pb) est comprise entre 0,5 et 1 bar.

6. Procédé selon l'une quelconque des revendications 1 à 5, dans lequel le procédé comprend une étape de pré-saturation réalisée avant l'injection de la barbotine et dans laquelle un liquide est injecté au travers de la préforme (3) dans la chambre d'imprégnation (21).

7. Système (1) de fabrication d'une pièce (8) en matériau composite comprenant :
- un moule (2) qui comprend une chambre d'imprégnation (21) comportant dans sa partie inférieure un filtre (210) destiné à recevoir une première face d'une préforme (3), la chambre d'imprégnation (21) étant fermée par une membrane (23) souple située en regard du filtre (210), ladite membrane (23) séparant la chambre d'imprégnation (21) d'une chambre de compaction (22) ;
- un dispositif d'injection d'un fluide de compression (5) dans la chambre de compaction (22) de manière à appliquer une première pression (Pm) sur la membrane (23) ;
- un dispositif d'injection d'une barbotine (4) comprenant des particules (7) céramiques en suspension dans une phase liquide dans la chambre d'imprégnation (21) avec une deuxième pression (Pb) ;
**caractérisé en ce que** le système (1) comprend en outre une unité de contrôle (6) configurée pour contrôler le dispositif d'injection du fluide de compression (5) et le dispositif d'injection de la barbotine (4) pour maintenir la deuxième pression (Pb) d'injection de la barbotine inférieure à la première pression (Pm) sur la membrane (23), l'unité de contrôle (6) étant en outre configurée pour augmenter progressivement la première pression (Pm) sur la membrane (23) et la deuxième pression (Pb) d'injection de la barbotine avec maintien de la deuxième pression (Pb) d'injection de la barbotine inférieure à la première pression (Pm) sur la membrane (23).

8. Système (1) selon la revendication 7, dans lequel le moule (2) comprend un orifice d'entrée de la barbotine débouchant sur un grillage de répartition (211) à l'intérieur de la chambre d'imprégnation (21).

9. Système (1) selon la revendication 8, dans lequel le grillage de répartition (211) comprend une face opposée à l'orifice d'entrée de la barbotine qui est recouverte par une première couche anti-adhérente poreuse (213).

10. Système (1) selon l'une quelconque des revendications 7 à 9, dans lequel le moule (2) comprend un orifice de sortie de la barbotine débouchant sur un grillage de drainage (212), ledit grillage de drainage (212) étant recouvert par le filtre (210).

11. Système (1) selon la revendication 10, dans lequel le grillage de drainage (212) comprend une face opposée à l'orifice de sortie de la barbotine qui est recouverte par une seconde couche anti-adhérente poreuse (214).

## Patentansprüche

1. Verfahren zur Herstellung eines Teils (8) aus Verbundwerkstoff, das die folgenden Schritte umfasst:
- Anordnen einer faserigen Vorform (3) in einer Form (2), umfassend eine Imprägnierkammer (21), die in ihrem unteren Teil einen Filter (210) umfasst, durch Auflegen einer ersten Fläche der Vorform (3) auf den Filter (210), wobei die Imprägnierkammer (21) durch eine elastische Membran (23) verschlossen ist, die einer zweiten Fläche der Vorform (3) zugewandt platziert ist, wobei die Membran (23) die Imprägnierkammer (21) von einer Verdichtungskammer (22) trennt;
**dadurch gekennzeichnet, dass** das Verfahren ferner die folgenden Schritte umfasst:
- Injektion eines Verdichtungsfluids in die Verdichtungskammer (22), so dass ein erster Druck (Pm) auf die Membran (23) ausgeübt wird;
- Injektion einer Aufschlämmung, die Keramikpartikel (7) umfasst, in die Imprägnierkammer (21) mit einem zweiten Druck (Pb) bei Aufrechterhaltung der Injektion des Verdichtungsfluids, wobei der zweite Injektionsdruck (Pb) der Aufschlämmung niedriger als der erste Druck (Pm) auf die Membran (23) ist,
wobei das Verfahren den folgenden Schritt umfasst:
- schrittweises Erhöhen des ersten Drucks (Pm) auf die Membran (23) und des zweiten Injektionsdrucks (Pb) der Aufschlämmung bei Aufrechterhaltung des zweiten Injektionsdrucks (Pb) der Aufschlämmung unter dem ersten Druck (Pm) auf die Membran (23).

2. Verfahren nach Anspruch 1, wobei die Druckdifferenz (ΔP) zwischen dem ersten Druck (Pm) und dem zweiten Druck (Pb) konstant auf einem vorher festgelegten Wert gehalten wird.

3. Verfahren nach einem der Ansprüche 1 bis 2, wobei die Druckdifferenz (ΔP) zwischen dem ersten Druck (Pm) und dem zweiten Druck (Pb) unter 5 bar beträgt.

4. Verfahren nach Anspruch 3, wobei die Druckdifferenz (ΔP) zwischen dem ersten Druck (Pm) und dem zweiten Druck (Pb) unter 2 bar beträgt.

5. Verfahren nach Anspruch 4, wobei die Druckdifferenz (ΔP) zwischen dem ersten Druck (Pm) und dem zweiten Druck (Pb) zwischen 0,5 und 1 bar liegt.

6. Verfahren nach einem der Ansprüche 1 bis 5, wobei das Verfahren einen Vorsättigungsschritt umfasst, der vor der Injektion der Aufschlämmung durchgeführt wird und bei dem eine Flüssigkeit durch die Vorform (3) in die Imprägnierkammer (21) eingeleitet wird.

7. System (1) zur Herstellung eines Teils (8) aus Verbundwerkstoff, das umfasst:
- eine Form (2), die eine Imprägnierkammer (21) umfasst, die in ihrem unteren Teil einen Filter (210) aufweist, der zur Aufnahme einer ersten Fläche einer Vorform (3) bestimmt ist, wobei die Imprägnierkammer (21) durch eine elastische Membran (23) verschlossen ist, die sich dem Filter (210) zugewandt befindet, wobei die Membran (23) die Imprägnierkammer (21) von einer Verdichtungskammer (22) trennt;
- eine Injektionsvorrichtung eines Verdichtungsfluids (5) in die Verdichtungskammer (22), so dass ein erster Druck (Pm) auf die Membran (23) angewendet wird;
- eine Injektionsvorrichtung einer Aufschlämmung (4), die Keramikpartikel (7) in Suspension in einer flüssigen Phase umfasst, in die Imprägnierkammer (21) mit einem zweiten Druck (Pb);
**dadurch gekennzeichnet, dass** das System (1) ferner eine Steuereinheit (6) umfasst, die ausgelegt ist, um die Injektionsvorrichtung des Verdichtungsfluids (5) und die Injektionsvorrichtung der Aufschlämmung (4) zu steuern, um den zweiten Injektionsdruck (Pb) der Aufschlämmung unter dem ersten Druck (Pm) auf die Membran (23) zu halten, wobei die Steuereinheit (6) ferner ausgelegt ist, um den ersten Druck (Pm) auf die Membran (23) und den zweiten Injektionsdruck (Pb) der Aufschlämmung bei Aufrechterhaltung des zweiten Injektionsdrucks (Pb) der Aufschlämmung unter dem ersten Druck (Pm) auf die Membran (23) schrittweise zu erhöhen.

8. System (1) nach Anspruch 7, wobei die Form (2) eine Einlassöffnung der Aufschlämmung umfasst, die auf einem Verteilungsgitter (211) im Inneren der Imprägnierkammer (21) ausmündet.

9. System (1) nach Anspruch 8, wobei das Verteilungsgitter (211) eine Fläche gegenüber der Einlassöffnung der Aufschlämmung umfasst, die von einer ersten porösen Anti-Haftschicht (213) bedeckt ist.

10. System (1) nach einem der Ansprüche 7 bis 9, wobei die Form (2) eine Auslassöffnung der Aufschlämmung umfasst, die auf einem Drainagegitter (212) ausmündet, wobei das Drainagegitter (212) von dem Filter (210) bedeckt ist.

11. System (1) nach Anspruch 10, wobei das Drainagegitter (212) eine Fläche gegenüber der Auslassöffnung der Aufschlämmung umfasst, die von einer zweiten porösen Anti-Haftschicht (214) bedeckt ist.

## Claims

1. A process for manufacturing a composite part (8) comprising the following steps:
- arrangement of a fibrous preform (3) in a mold (2) comprising an impregnation chamber (21) which comprises in its lower part a filter (210) by making a first face of the preform (3) rest on said filter (210), the impregnation chamber (21) being closed by a flexible membrane (23) placed opposite a second face of the preform (3), said membrane (23) separating the impregnation chamber (21) from a compaction chamber (22); **characterized in that** the process further comprises the following steps:
- injection of a compression fluid into the compaction chamber (22) so as to apply a first pressure (Pm) on the membrane (23);
- injection of a slurry comprising ceramic particles (7) into the impregnation chamber (21) with a second pressure (Pb) while maintaining the injection of the compression fluid, the second injection pressure (Pb) of the slurry being lower than the first pressure (Pm) on the membrane (23),
wherein the process comprises the following step:
- progressive increase of the first pressure (Pm) on the membrane (23) and of the second injection pressure (Pb) of the slurry with maintenance of the second injection pressure (Pb) of the slurry lower than the first pressure (Pm) on the membrane (23).

2. The process as claimed in claim 1, wherein the pressure difference (ΔP) between the first pressure (Pm) and the second pressure (Pb) is kept constant at a predetermined value.

3. The process as claimed in one of claims 1 to 2 wherein the pressure difference (ΔP) between the first pressure (Pm) and the second pressure (Pb) is less than 5 bar.

4. The process as claimed in claim 3, wherein the pressure difference (ΔP) between the first pressure (Pm) and the second pressure (Pb) is less than 2 bar.

5. The process as claimed in claim 4, wherein the pressure difference (ΔP) between the first pressure (Pm) and the second pressure (Pb) is between 0.5 and 1 bar.

6. The process as claimed in any one of claims 1 to 5, wherein the process comprises a pre-saturation step carried out prior to injection of the slurry and wherein a liquid is injected through the preform (3) into the impregnation chamber (21).

7. A system (1) for manufacturing a composite part (8) comprising:
- a mold (2) which comprises an impregnation chamber (21) having in its lower part a filter (210) intended to receive a first face of a preform (3), the impregnation chamber (21) being closed by a flexible membrane (23) located opposite the filter (210), said membrane (23) separating the impregnation chamber (21) from a compaction chamber (22);
- a device for injecting a compression fluid (5) into the compaction chamber (22) so as to apply a first pressure (Pm) on the membrane (23);
- a device for injecting a slurry (4) comprising ceramic particles (7) suspended in a liquid phase into the impregnation chamber (21) with a second pressure (Pb);
**characterized in that** the system (1) further comprises a control unit (6) configured to control the compression fluid injection device (5) and the slurry injection device (4) to maintain the second slurry injection pressure (Pb) lower than the first pressure (Pm) on the membrane (23), the control unit (6) being further configured to progressively increase the first pressure (Pm) on the membrane (23) and the second injection pressure (Pb) of the slurry while maintaining the second injection pressure (Pb) of the slurry lower than the first pressure (Pm) on the membrane (23).

8. The system (1) as claimed in claim 7, wherein the mold (2) comprises a slurry inlet opening leading to a distribution grid (211) inside the impregnation chamber (21).

9. The system (1) as claimed in claim 8, wherein the distribution grid (211) comprises a face opposite to the slurry inlet opening which is covered by a first porous non-stick layer (213).

10. The system (1) as claimed in any one of claims 7 to 9, wherein the mold (2) comprises a slurry outlet opening leading to a drainage grid (212), said drainage grid (212) being covered by the filter (210).

11. The system (1) as claimed in claim 10, wherein the drainage grid (212) comprises a face opposite the slurry outlet which is covered by a second porous non-stick layer (214).
